# FASCICULE DE BREVET EUROPEEN

(11) **EP 3 512 742 B1**
(45) Date de publication et mention de la délivrance du brevet: **23.12.2020**
(21) Numéro de dépôt: 17771713.9
(22) Date de dépôt: 13.09.2017
(51) Int. Cl.: B60R 9/048

(54) **DISPOSITIF DE SECURISATION D'UNE ECHELLE A UNE GALERIE DE VEHICULE OU SIMILAIRE**
VORRICHTUNG ZUR BEFESTIGUNG EINER LEITER AM FAHRZEUGDACH
DEVICE FOR FIXING A LADDED ON THE ROOF OF A VEHICLE

(30) Priorité: 14.09.2016 FR 1658575
(43) Date de publication de la demande: 24.07.2019
(73) Titulaire: Daforib Sécurité, 59482 Haubourdin (FR)
(72) Inventeur: TIERNY, Marc, 59280 Bois Grenier (FR)
(74) Mandataire: Lavialle, Bruno François Stéphane
(86) Numéro de dépôt international: PCT/EP2017/072990
(87) Numéro de publication internationale: WO 2018/050682

(56) Documents cités:
- EP-A1- 2 345 557
- WO-A1-2004/097154
- GB-A- 2 169 340
- US-B1- 7 140 582
- US-B1- 8 316 993

## Description

L'invention concerne un dispositif de sécurisation d'une échelle à une galerie de véhicule ou similaire.

### ARRIERE-PLAN TECHNOLOGIQUE DE L'INVENTION

De tels dispositifs de sécurisation sont utilisés par des professionnels qui ont besoin d'échelles dans leur activité. Les échelles sont habituellement transportées sur la galerie d'un véhicule. Le document EP2345557 décrit un tel dispositif qui comprend une traverse au centre de laquelle une tige terminée par un crochet est montée pour coulisser. La traverse prend appui sur les montants ou les échelons de l'échelle posée sur la galerie, tandis que le crochet vient crocheter l'une des barres de la galerie. Le dispositif de sécurisation comprend un organe de verrouillage de la tige de type rotatif comportant une poignée de manœuvre s'étendant sur le côté de la traverse. Un organe de libération permet de libérer la tige et ainsi de retirer le dispositif de sécurisation pour libérer l'échelle de la galerie.

Dans ce type de dispositif, l'utilisateur doit d'abord tirer sur la tige pour amener le crochet au contact de la barre de la galerie, puis actionner l'organe de verrouillage pour bloquer la tige.

L'accès à la tige n'est pas toujours facile, surtout si le véhicule est haut. En outre, Si le crochet n'a pas été rapproché de la barre de galerie avant le verrouillage, il se peut que la course de serrage soit trop faible pour installer une tension suffisante dans la tige

Le document GB2169340A décrit un dispositif d'immobilisation d'une échelle sur une galerie de véhicule selon le préambule de la revendication 1.

### OBJET DE L'INVENTION

L'invention a pour objet un dispositif de sécurisation d'une échelle à une galerie de véhicule ou similaire facile à utiliser et manipuler.

### PRESENTATION DE L'INVENTION

En vue de la réalisation de ce but, on propose un dispositif d'immobilisation d'une échelle sur une galerie de véhicule ou similaire, le dispositif comportant une traverse destinée à venir en appui contre des montants ou des échelons de l'échelle, et une tige terminée par un crochet et montée coulissante dans la traverse. Selon l'invention, le dispositif est muni de moyens de blocage automatiques empêchant le crochet de s'éloigner de la traverse, et de moyens de serrage comportant un organe de manœuvre actionnable pour provoquer un coulissement de la tige dans la traverse de façon à rapprocher le crochet vers la traverse de façon à obtenir par actionnements répétés un serrage de l'échelle sur la galerie.

Ainsi, l'utilisateur peut, en actionnant l'organe de manœuvre des moyens de serrage, provoquer le serrage de l'échelle contre la galerie sans avoir à manipuler la tige, ce qui simplifie l'utilisation du dispositif de l'invention. Chaque actionnement rapproche le crochet de la traverse, la tige étant automatiquement bloquée par les moyens de blocage à l'issue de la manœuvre. Il suffit d'actionner plusieurs fois l'organe de manœuvre des moyens de serrage jusqu'à obtenir un serrage ferme, ce qui garantit l'immobilisation de l'échelle sur la galerie.

Bien entendu, il conviendra de prévoir la possibilité de libérer les moyens de blocage pour permettre le libre éloignement du crochet de la traverse et ainsi la libération de l'échelle.

Selon un aspect particulier de l'invention particulièrement pratique, l'organe de manœuvre des moyens de serrage s'étend par-dessus la traverse en service. L'organe de manœuvre est donc très facilement accessible, en étant dégagé des montants et barreaux de l'échelle.

Selon un autre aspect de l'invention particulièrement pratique, les moyens de blocage comportent un organe de libération qui s'étend par-dessus l'organe de manœuvre des moyens de serrage. Ainsi, l'organe de libération est facilement accessible, du même côté de la traverse que l'organe de manœuvre. Le serrage et la libération peuvent se faire du même côté du véhicule.
Selon un aspect particulier de l'invention, les moyens de serrage comportent un levier monté pivotant sur la traverse selon un axe de pivotement perpendiculaire à une direction de coulissement de la tige, le levier comportant un bec s'étendant de part et d'autre de la tige pour, lors d'une manœuvre du levier, soulever et faire pivoter une plaquette perforée au travers de laquelle passe la tige, pour mordre sur la tige par arc-boutement et emmener la tige pour provoquer son coulissement.
Selon un aspect particulier de l'invention, le levier comporte une poignée s'étendant par-dessus un bras de la traverse pour être manœuvrable par l'utilisateur.
Selon un aspect particulier de l'invention, la patte de blocage est associée à un organe de libération pour faire pivoter la patte de blocage de façon à libérer la tige. Selon un aspect particulier de l'invention, la patte de blocage comporte une extrémité saillante formant un organe de libération pour faire pivoter la patte de blocage.
Selon un aspect particulier de l'invention, l'organe de libération s'étend par-dessus l'organe de manœuvre.

### DESCRIPTION DES FIGURES

L'invention sera mieux comprise à la lumière de la description qui suit d'un mode particulier de réalisation de l'invention, en référence aux figures des dessins annexés parmi lesquelles :
- La figure 1 est une vue en perspective d'un dispositif de sécurisation selon un premier mode particulier de réalisation de l'invention, comportant des parties injectées ;
- La figure 2 est une vue en perspective éclatée du dispositif de la figure 1 ;
- La figure 3 est une vue de face du dispositif de la figure 1, le cache central ayant été omis ;
- La figure 4 est une vue analogue à celle de la figure 3, le levier de libération ayant été omis pour montrer l'organe de verrouillage ;
- La figure 5 est une vue en perspective d'un deuxième mode particulier de réalisation de l'invention, comportant des parties en tôles pliées ;
- La figure 6 est une vue analogue à celle de la figure 5 illustrant une variante de réalisation de l'invention.

### DESCRIPTION DETAILLEE D'UN MODE DE REALISATION

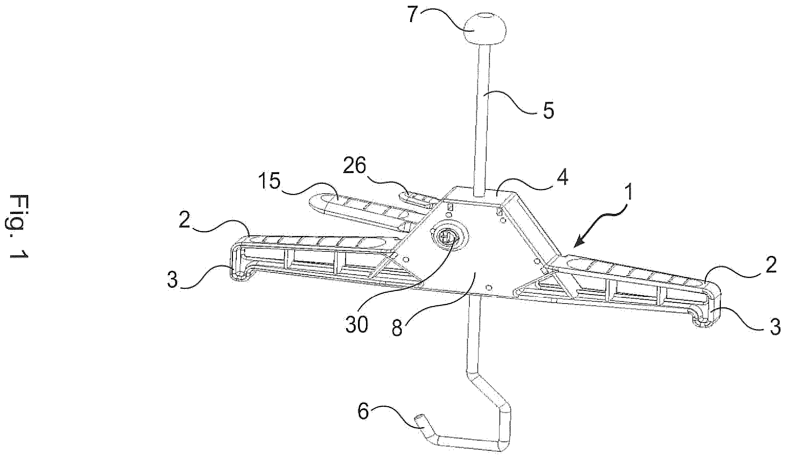

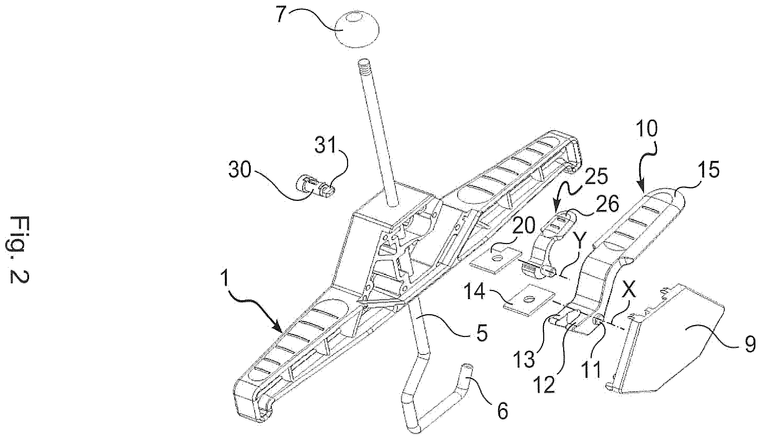

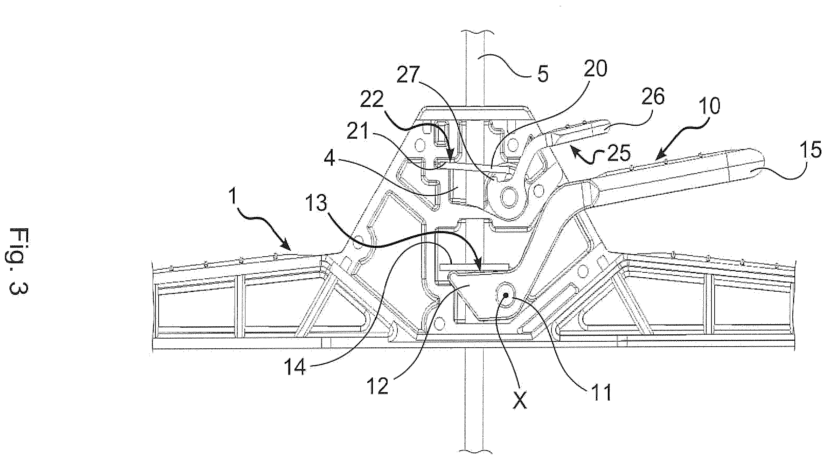

En référence aux figures 1 à 4, et conformément à un premier mode particulier de réalisation de l'invention, le dispositif d'immobilisation d'une échelle à une galerie de véhicule comprend une traverse 1, ici en matière plastique injectée, comportant deux bras 2 terminés par des redans 3 et s'étendant de part et d'autre d'une partie centrale 4. La traverse est destinée à venir reposer sur les montants d'une échelle posée sur la galerie. La partie centrale 4 est creuse et est fermée par une paroi latérale 8 venue de matière avec la traverse, et une paroi latérale opposée 9 rapportée, autorisant l'accès à la partie centrale 4. La base et le plafond de la partie centrale creuse 4 sont percés pour recevoir une tige 5 montée à coulissement sur la traverse 1. La tige 5 a une partie inférieure conformée en crochet 6 pour crocheter une barre de la galerie, et comporte une poignée de manœuvre 7 à sa partie supérieure.

Le dispositif de l'invention est équipé de moyens de serrage comportant un levier 10 monté à pivotement selon un axe X perpendiculaire à une direction de coulissement de la tige 5. A cet effet, le levier 10 comporte des de tétons 11 venus de matière de part et d'autre du levier et s'engageant dans des cavités (non visibles ici) des parois latérales 8,9 pour réaliser une liaison pivot. Le levier 10 comporte un bec 12 qui est creusé dans sa partie centrale s'étendre de part et d'autre de la tige 5 et qui présente une plateforme 13 pour recevoir un organe de déplacement sous la forme d'une plaquette métallique 14 perforée au travers de laquelle passe la tige 5. Le levier 10 comporte une poignée de manœuvre 15 qui sort de la partie centrale 4 pour s'étendre par-dessus l'un des bras 2 de la traverse 1.

Le dispositif de l'invention est équipé de moyens de blocage sous la forme d'une patte métallique 20 perforée dans laquelle passe la tige 5. La patte de blocage 20 est placée au-dessus du levier 10 et comporte une extrémité 21 engagée dans une cavité latérale 22 de la partie centrale 4 autorisant un léger pivotement de la patte de blocage 20.

L'utilisation du dispositif de l'invention est la suivante. Une fois l'échelle en place sur la galerie, on place le dispositif par-dessus l'échelle de sorte que la traverse 1 soit appuyée sur les montants de l'échelle, les redans 3 s'étendant de part et d'autre des montants de l'échelle. Le crochet 6 est glissé sous une barre de la galerie du véhicule. Si la poignée 7 est accessible, on fait remonter la tige 5 en utilisant la poignée 7 jusqu'à ce que le crochet 6 vienne en appui contre la barre de la galerie.

Pour serrer, il suffit d'appuyer sur la poignée 15. Le bec 12 a des extrémités en saillie qui soulèvent une extrémité de la plaquette 14 qui mord sur la tige 5 par arc-boutement. La rotation du levier 10 provoque le soulèvement de la plaquette 14 qui emmène la tige 5 avec lui, provoquant un coulissement de la tige 5 et donc un rapprochement du crochet 6 vers la traverse 1. Si besoin, on recommence plusieurs fois la manœuvre de la poignée 15 jusqu'à faire venir le crochet 6 au contact de la barre de la galerie. On force un peu sur la poignée 15 pour installer une précontrainte dans le dispositif de l'invention.

En relâchant la poignée 15, la tige 5 va très légèrement redescendre, entraînant avec elle la patte de blocage 20, qui se met en position de coincement par arc-boutement et bloque donc la tige 5 en position, empêchant le crochet de s'éloigner de la traverse. Le dispositif est alors automatiquement bloqué en position serrée. Et l'échelle immobilisée contre la galerie.

Pour libérer la tige 5, le dispositif est équipé d'un organe de libération sous la forme d'un levier 25 qui est monté pivotant sur la partie centrale selon un axe parallèle à l'axe X, et comportant une poignée de libération 26 reliée à un doigt 27 qui s'étend en regard de la patte de blocage 20 pour la soulever quand l'utilisateur appuie sur la poignée de libération 26, ce qui neutralise l'arc-boutement et la patte de blocage 20 et libère la tige 5. La poignée de libération 26 s'étend ici par-dessus la poignée de manœuvre 15 des moyens de serrage.

On remarquera que la poignée de manœuvre 15 et la poignée de libération 26 s'étendent du même côté de la traverse, par-dessus celle-ci, et sont donc facilement accessibles.

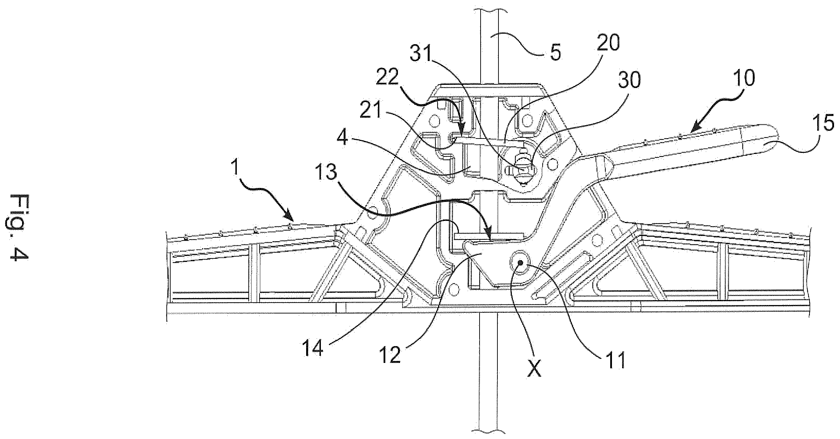

Selon un aspect particulier de l'invention, le dispositif de l'invention est équipé de moyens de verrouillage de la patte de blocage 20 sous la forme d'un canon 30 monté pivotant dans la partie centrale 4 selon un axe parallèle à l'axe X. Le canon 30 est terminé par un doigt 31, ici en forme de pyramide aplatie, s'étendant sous la patte de blocage 20. Dans la position de libération illustrée à la figure 4, le doigt 31 ne gêne pas la manœuvre de la patte de blocage 20 par l'utilisateur, de sorte que dispositif de l'invention peut être librement débloqué. Cependant, si le canon 30 est tourné d'un quart de tour (par exemple à l'aide d'une clé) vers une position de verrouillage, le doigt est redressé et empêche tout déblocage du dispositif de l'invention, en interdisant la manœuvre de la patte de blocage 20 au moyen du levier 25. Les moyens de verrouillage 30 constituent un antivol empêchant un voleur de débloquer le dispositif et emporter l'échelle.

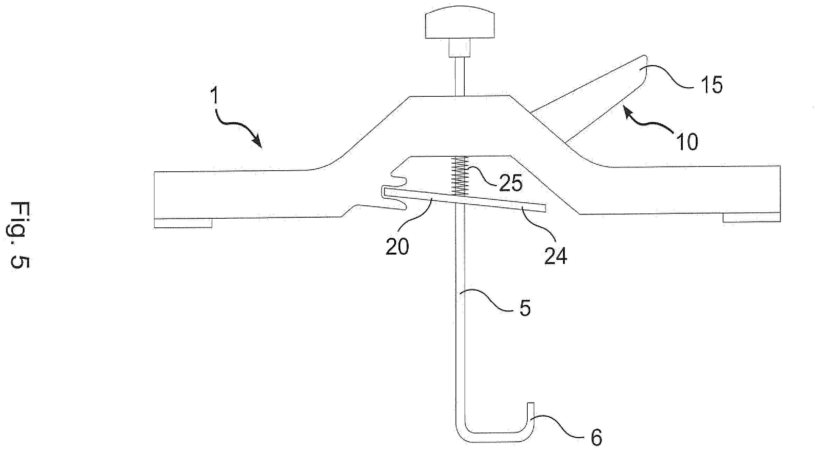

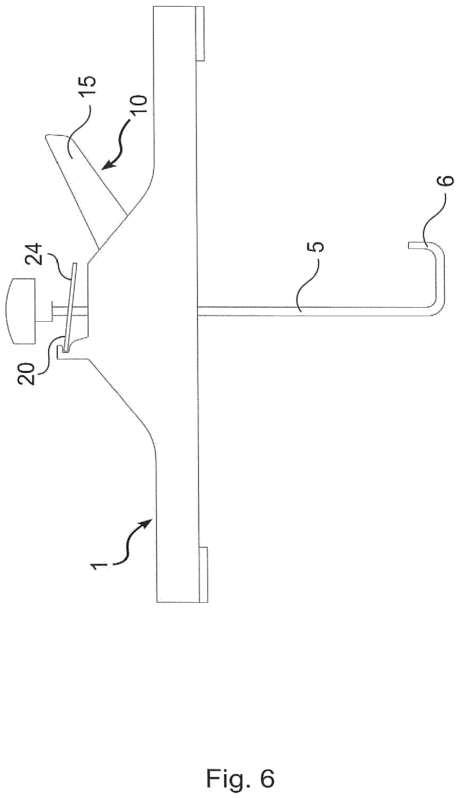

Conformément aux modes de réalisation illustrés aux figures 5 et 6, la traverse 1 est maintenant réalisée en tôle pliée. La tige 5 est toujours montée à coulissement dans la traverse 1. On reconnaît la poignée de manœuvre 15 du levier 10 des moyens de serrage. Ici, la patte de blocage 20 est extérieure à la traverse 1. Elle se met en position de blocage illustrée ici soit par simple gravité comme sur la figure 6, soit au moyen d'un ressort 25 comme sur la figure 5. La patte de blocage 20 comprend une extrémité 24 qui forme un organe de libération sur lequel l'utilisateur peut agir pour libérer la tige 5.

L'invention n'est pas limitée à ce qui vient d'être décrit, mais englobe au contraire toute variante entrant dans le cadre défini par les revendications.

## Revendications

1. Dispositif d'immobilisation d'une échelle sur une galerie de véhicule ou similaire, le dispositif comportant une traverse (1) destinée à venir en appui contre des montants de l'échelle, et une tige (5) terminée par un crochet (6) et montée coulissante dans une partie centrale (4) de la traverse, **caractérisé en ce que** le dispositif est muni de moyens de blocage (20) automatiques empêchant le crochet de s'éloigner de la traverse, et de moyens de serrage (10,14) comportant un organe de manœuvre (15) actionnable pour provoquer un coulissement de la tige dans la traverse de façon à rapprocher le crochet vers la traverse, de façon à obtenir par actionnements répétés un serrage de l'échelle sur la galerie.

2. Dispositif selon la revendication 1, dans lequel les moyens de serrage comportent un levier (10) monté pivotant sur la traverse selon un axe de pivotement (X) perpendiculaire à une direction de coulissement de la tige, le levier comportant un bec (12) s'étendant de part et d'autre de la tige pour, lors d'une manœuvre du levier, soulever et faire pivoter une plaquette (14) perforée au travers de laquelle passe la tige, pour mordre sur la tige par arc-boutement et emmener la tige pour provoquer son coulissement.

3. Dispositif selon la revendication 2, dans lequel le levier (10) comporte une poignée (15) s'étendant par-dessus un bras de la traverse pour être manœuvrable par l'utilisateur.

4. Dispositif selon la revendication 1, dans lequel les moyens de blocage comportent une patte de blocage (20) perforée dans laquelle passe la tige et qui coopère avec la tige par arc-boutement pour empêcher tout éloignement du crochet de la traverse et bloquer automatiquement la tige.

5. Dispositif selon la revendication 4, dans lequel la patte de blocage est associée à un organe de libération (26) pour faire pivoter la patte de blocage de façon à libérer la tige (5).

6. Dispositif selon la revendication 5, dans lequel la patte de blocage a une première extrémité (21) engagée dans une cavité (22) de la traverse pour pouvoir pivoter et coincer la tige par arc-boutement, l'organe de libération étant la poignée d'un levier (25) comportant un doigt (27) qui soulève une deuxième extrémité de la patte de blocage lorsque l'utilisateur actionne la poignée.

7. Dispositif selon la revendication 5, dans laquelle la patte de blocage (20) comporte une extrémité saillante (24) formant un organe de libération pour faire pivoter la patte de blocage.

8. Dispositif selon la revendication 7, dans laquelle la patte de blocage (20) est extérieure à la traverse.

9. Dispositif selon la revendication 6 ou la revendication 7, dans lequel l'organe de libération (24 ;26) s'étend par-dessus l'organe de manœuvre (15).

10. Dispositif selon la revendication 1, dans lequel la traverse comporte une partie centrale (4) creuse au travers de laquelle passe la tige (5), la partie centrale comportant une paroi latérale (8) venue de matière avec la traverse, et une paroi latérale opposée (9) rapportée, la tige passant au travers d'un plafond et d'un plancher de la partie centrale.

## Patentansprüche

1. Vorrichtung zum Festmachen einer Leiter auf einem Fahrzeugdachträger oder dergleichen, wobei die Vorrichtung einen Querträger (1) umfasst, der dazu bestimmt ist, an Holmen der Leiter zur Anlage zu kommen, und eine Stange (5), die mit einem Haken (6) abschließt und in einem zentralen Teil (4) des Querträgers verschiebbar gelagert ist, **dadurch gekennzeichnet, dass** die Vorrichtung mit automatischen Blockiermitteln (20) ausgestattet ist, die verhindern, dass sich der Haken von dem Querträger entfernt, sowie mit Spannmitteln (10, 14), die ein Betätigungselement (15) umfassen, das betätigbar ist, um ein Verschieben der Stange in dem Querträger derart zu verursachen, dass sich der Haken an den Querträger derart annähert, dass durch wiederholte Betätigungen ein Festspannen der Leiter auf dem Dachträger erreicht wird.

2. Vorrichtung nach Anspruch 1, bei der die Spannmittel einen Hebel (10) umfassen, der an dem Querträger um eine Schwenkachse (X), die senkrecht zu einer Verschiebungsrichtung der Stange ist, verschwenkbar gelagert ist, wobei der Hebel eine Spitze (12) umfasst, die sich zu beiden Seiten der Stange erstreckt, um während einer Betätigung des Hebels eine mit einem Loch versehene Platte (14), durch die die Stange verläuft, anzuheben und zu verschwenken, um an der Stange durch Selbsthemmung anzugreifen und die Stange mitzunehmen, um ihr Verschieben zu verursachen.

3. Vorrichtung nach Anspruch 2, bei der der Hebel (10) einen Griff (15) umfasst, der sich über einem Arm des Querträgers erstreckt, um von dem Benutzer betätigbar zu sein.

4. Vorrichtung nach Anspruch 1, bei der die Blockiermittel eine mit einem Loch versehene Blockierlasche (20) umfassen, in der die Stange verläuft und die durch Selbsthemmung mit der Stange zusammenwirkt, um jede Entfernung des Hakens von dem Querträger zu verhindern und die Stange automatisch zu blockieren.

5. Vorrichtung nach Anspruch 4, bei der die Blockierlasche mit einem Freigabeelement (26) verbunden ist, um die Blockierlasche derart zu verschwenken, dass die Stange (5) freigegeben wird.

6. Vorrichtung nach Anspruch 5, bei der die Blockierlasche ein erstes Ende (21) hat, das in einen Hohlraum (22) des Querträgers eingefügt ist, um sich verschwenken zu können und die Stange durch Selbsthemmung einzuklemmen, wobei das Freigabeelement der Griff eines Hebels (25) ist, der einen Finger (27) hat, der ein zweites Ende der Blockierlasche anhebt, wenn der Benutzer den Hebel betätigt.

7. Vorrichtung nach Anspruch 5, bei der die Blockierlasche (20) ein vorstehendes Ende (24) umfasst, das ein Freigabeorgan zum Verschwenken der Blockierlasche bildet.

8. Vorrichtung nach Anspruch 7, bei der die Blockierlasche (20) außerhalb des Querträgers liegt.

9. Vorrichtung nach Anspruch 6 oder Anspruch 7, bei der sich das Freigabeorgan (24; 26) über dem Betätigungsorgan (15) erstreckt.

10. Vorrichtung nach Anspruch 1, bei der der Querträger einen hohlen zentralen Teil (4) umfasst, durch den die Stange (5) hindurchgeht, wobei der zentrale Teil eine Seitenwand (8) hat, die aus demselben Material integral mit dem Querträger geformt ist, und eine angefügte gegenüberliegende Seitenwand (9), wobei die Stange durch eine Decke und einen Boden des zentralen Teils hindurchgeht.

## Claims

1. Device for immobilizing a ladder on a vehicle roof rack or the like, the device including a crossmember (1) intended to bear against side rails of the ladder and a rod (5) terminated by a hook (6) and slidably mounted in a central part (4) of the crossmember, **characterized in that** the device is provided with automatic locking means (20) preventing the hook from moving away from the crossmember and with clamping means (10,14) including a manoeuvring member (15) which can be actuated to cause the rod to slide in the crossmember so as to move the hook towards the crossmember so as to obtain by repeated actuations clamping of the ladder onto the roof rack.

2. Device according to claim 1, in which the clamping means include a lever (10) mounted to pivot on the crossmember about a pivot axis (X) perpendicular to a direction of sliding of the rod, the lever including a nose (12) extending on either side of the rod in order, on manoeuvring the lever, to raise and rotate a perforated plate (14) through which the rod passes to bite on the rod with a wedging effect and to cause the rod to slide.

3. Device according to claim 2, in which the lever (10) includes a handle (15) extending over an arm of the crossmember so as to be manoeuvrable by the user.

4. Device according to claim 1, in which the locking means include a perforated locking tab (20) through which the rod passes and which cooperates with the rod with a wedging effect to prevent any movement of the hook away from the crossmember and automatically lock the rod.

5. Device according to claim 4, in which the locking tab is associated with a release member (26) for pivoting the locking tab so as to release the rod (5).

6. Device according to claim 5, in which the locking tab has a first end (21) engaged in a cavity (22) of the crossmember in order to be able to pivot and to jam the rod with a wedging effect, the release member being the handle of a lever (25) including a finger (27) that lifts a second end of the locking tab when the user actuates the handle.

7. Device according to claim 5, in which the locking tab (20) includes a projecting end (24) forming a release member for pivoting the locking tab.

8. Device according to claim 7, in which the locking tab (20) is external to the crossmember.

9. Device according to claim 6 or claim 7, in which the release member (24; 26) extends over the manoeuvring member (15).

10. Device according to claim 1, in which the crossmember includes a hollow central part (4) through which the rod (5) passes, the central part including a side wall (8) integrally formed with the crossmember and an attached opposite side wall (9), the rod passing through a ceiling and a floor of the central part.
